# EUROPEAN PATENT SPECIFICATION

(11) **EP 2 541 360 B1**
(45) Date of publication and mention of the grant of the patent: **19.03.2014**
(21) Application number: 12186012.6
(22) Date of filing: 28.08.2008
(51) Int. Cl.: G05D 7/01, G05D 16/10, G05D 16/06

(54) **Modular in-line fluid regulators**
Modulare Reihenflüssigkeitsregler
Régulateurs de fluide modulaires en ligne

(30) Priority: 14.09.2007 US 855830
(43) Date of publication of application: 02.01.2013
(62) Divisional of application: 08798899.4
(73) Proprietor: Tescom Corporation, Elk River, MN 55330 (US)
(72) Inventor: Patterson, Daryll D., Brooklyn Park, MN 55444 (US); Jablonski, Jason Dirk, Marshalltown, IA 50158 (US)
(74) Representative: Bohnenberger, Johannes

(56) References cited:
- EP-A2- 0 298 272
- WO-A1-96/30817
- DE-A1- 4 012 801
- DE-A1- 19 744 048
- GB-A- 2 073 853
- US-A- 5 465 750

## Description

### FIELD OF THE DISCLOSURE

The present disclosure relates generally to fluid regulators and, more particularly, to modular in-line fluid regulators.

### BACKGROUND

Process control systems utilize a variety of field devices to control process parameters. Fluid regulators are commonly distributed throughout process control systems to control the pressures of various fluids (e.g., liquids, gasses, etc.). Fluid regulators are typically used to regulate the pressure of a fluid to a substantially constant value. Specifically, a fluid regulator has an inlet that typically receives a supply fluid at a relatively high pressure, which may vary or fluctuate, and provides a relatively lower and substantially constant pressure at an outlet. For example, a gas regulator associated with a piece of equipment may receive a gas having a relatively high pressure from a gas distribution source and may regulate the gas to have a lower, substantially constant pressure suitable for safe, efficient use by the equipment.

Fluid regulators typically control the flow and pressure of fluid using a diaphragm or piston having a set or control pressure force applied to one of its sides via a bias spring. The diaphragm or piston is also operatively coupled directly or via a linkage to a valve component that is moved relative to an orifice of a seat that fluidly couples the inlet of the regulator to its outlet. The diaphragm or piston moves the valve component in response to a difference between the outlet pressure and the set or control pressure to vary the flow through the regulator to achieve a substantially constant outlet pressure, which provides a balancing force to the other side of the diaphragm or piston that is equal or proportional to the set or control pressure.

Fluid regulators may be configured as single-stage or one-stage systems in which only one regulating valve and associated components are fluidly interposed between an inlet pressure and a regulated outlet pressure. However, such single-stage or one-stage systems may exhibit significant changes in output pressure in response to changes in the inlet or supply pressure. For example, in some applications, such as those involving regulation of a fluid provided via a high-pressure gas bottle, inlet pressure at the regulator can vary by a factor of six or more, which can cause significant variation in the regulated output pressure provided by a single-stage regulator.

Multi-stage (e.g., two-stage) fluid regulators can provide substantially reduced output pressure variation in response to inlet pressure variations such as those noted above. For example, in comparison to a one-stage fluid regulator, a two-stage fluid regulator may provide a five-fold reduction in output pressure variation in response to an inlet pressure variation. However, in practice, two-stage fluid regulator systems are often implemented after a one-stage system fails to provide a desired level of performance (e.g., a desired maximum output pressure variation). As a result, a second, bulky fluid regulator may be field installed in series with the original, underperforming fluid regulator to achieve the desired overall performance. Alternatively, the original, underperforming fluid regulator may be removed and replaced with another two-stage fluid regulator assembly. In either case, such field-based retrofit or re-installation can be very time consuming, costly, and may result in a regulator system that consumes significantly more valuable space (e.g., control cabinet space) in the process control environment.

Document EP 0 298 272 discloses a pressure regulator in which two pressure stages, a blow off valve, and a safety valve are integrated in a housing body. The two pressure stages are disposed within a sleeve that is secured to the housing body, and a spring-loaded piston engages a valve seat to regulate fluid pressure through the regulator.

US 5,465,750 discloses a two-stage regulator having a first regulator and a second regulator disposed in series. The first and second regulators are mounted on a unitary base that forms the lower portion of each of the first and second regulators, and each of the first and second regulators include a diaphragm and spring that cooperate to regulate fluid pressure.

Document GB 2 073 853 discloses a safety regulator that includes primary and secondary pressure stages that are incorporated into a unitary body. Each of the primary and secondary pressure stages includes a diaphragm assembly to regulate fluid pressure, and the secondary pressure stage includes a piston that slidingly engages an inner wall of the unitary housing.

### SUMMARY

The present invention provides a fluid regulator as defined in claim 1. Further embodiments of the invention may be realised according to the corresponding dependent claims.

### BRIEF DESCRIPTION OF THE DRAWINGS

FIG. 1 depicts a known in-line fluid regulator configuration.
FIG. 2 depicts an example two-stage fluid regulator system or assembly having a modular in-line fluid regulator installed in an adjustable regulator.
FIG. 3 depicts another example modular in-line fluid regulator.
FIG. 4 depicts the example modular in-line fluid regulator of FIG. 3 installed on a known adjustable regulator.

### DETAILED DESCRIPTION

The example modular in-line fluid regulators described herein can be easily installed in another fluid regulator to form a multi-stage (e.g., two-stage) fluid regulator having excellent regulation characteristics, which minimize the effect of supply or inlet pressure changes on output or outlet pressure. More specifically, in some implementations, the example modular in-line fluid regulators may be installed in the body of another fluid regulator (e.g., a primary adjustable regulator) to form a first stage fluid regulator that is fluidly coupled to the other fluid regulator, which then functions as a second-stage regulator. The other regulator (e.g., the primary adjustable fluid regulator) may include a threaded opening into which the modular in-line fluid regulator is inserted and threadably engaged. Once engaged to the other fluid regulator, the modular in-line fluid regulator may function as a first-stage regulator for the other fluid regulator to enable the other fluid regulator to provide improved output regulation characteristics.

In other implementations, the example modular in-line fluid regulators may be provided in a casing or housing having an inlet and an outlet. The outlet may be formed in a threaded protrusion or fitting that is configured to be threadably engaged to a threaded inlet opening of a conventional fluid regulator (e.g., an adjustable fluid regulator). In these implementations, the modular in-line fluid regulators may have a cartridge-like appearance and geometry. Further, similar to the implementations noted above in which the modular in-line fluid regulator is inserted into a threaded opening of another regulator body, these other implementations may use the modular fluid regulator as a first-stage fluid regulator to the other fluid regulator, which then functions as a second-stage fluid regulator.

More generally, the example modular in-line fluid regulators described herein can be factory installed as an option to provide a relatively compact two-stage fluid regulator system. Alternatively, the example modular in-line fluid regulators described herein can be easily field retrofitted or installed in another fluid regulator to convert a one-stage regulation system to a relatively compact two-stage regulation system.

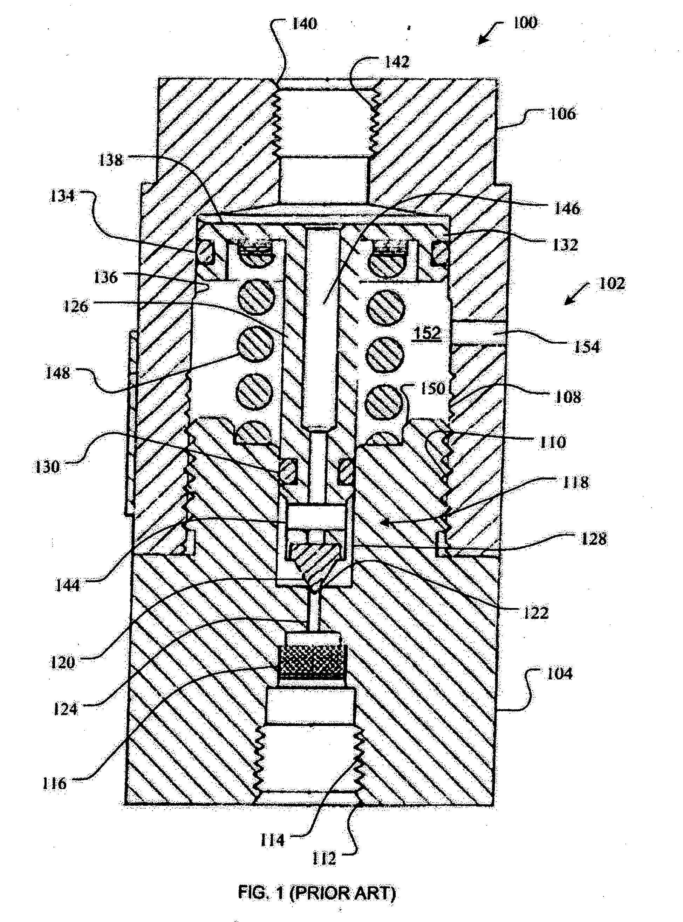

FIG. 1 depicts a cross-sectional view of a known in-line one-stage fluid regulator 100. The known fluid regulator 100 has generally cylindrical body, housing, or casing 102 including a lower casing or first portion 104 and an upper casing, bonnet, or second portion 106. The first and second portions 104 and 106 are threadably engaged via respective mating threads 108 and 110. The first portion 104 includes an inlet port 112 having internal threads 114 to engage a pipe or other fluid carrying conduit. Additionally, a filter or screen 116 is provided in the inlet 112 to prevent dirt and/or other debris from contaminating the regulator and impairing its operation. The first portion 104 also holds or guides a valve assembly 118. The valve assembly 118 includes a fluid flow control member or plug 120 that moves relative to an opening or orifice 122 of a passage 124, which is fluidly coupled to the inlet 112, to control the flow of fluid into the regulator 100. The fluid flow control member or plug 120 is fixed to a stem 126 that is slidably engaged with a bore 128 in the first housing portion 104. An o-ring 130 forms a circumferential seal between the wall of the bore 128 and the stem 126. The stem 126 is integrally formed with a piston 132 that is slidably engaged within the upper or second casing portion 106. An o-ring 134 provides a seal against an inner wall 136 of the upper or second casing portion 106. An upper surface 138 of the piston 132 is fluidly coupled to an outlet pressure port 140, which includes internal threads 142 for receiving a pipe or other fluid conduit.

As can been seen clearly in FIG. 1, the bore 128 is fluidly coupled to the outlet port 140 via passageways 144 and 146. Thus, when the plug 120 is spaced from the orifice 122, fluid can flow from the inlet 112 to the outlet 140 to increase the pressure at the outlet 140. A compression spring 148 is disposed between the piston 132 and a seat 150 of the first or lower casing portion 104. A chamber 152 between the piston 132 and the seat 150 is vented via an opening 154 to the atmosphere and, thus, remains at atmospheric pressure during operation of the regulator 100.

In operation, the spring 148 biases or urges the piston 132 and, thus, the plug 120 away from the orifice 122 so that the valve 118 provides a normally-open configuration. Thus, in the absence of a pressure greater than atmospheric pressure at the outlet 140, the valve 118 is in a fully open condition. Further, as the inlet 112 passes pressurized fluid to the outlet 140, the pressure at the outlet 140 increases and the pressure on the surface 138 of the piston 132 increases and urges the plug 120 toward the orifice 122, thereby restricting the flow of fluid from the inlet 112 to the outlet 140. When the pressure at the outlet 140 is sufficiently high, a force balance condition (i.e., the pressure exerted by the spring will balance against the pressure at the outlet 140) will be achieved so that the pressure at the outlet 140 is at a substantially constant pressure lower than the pressure at the inlet 112. The force balance-based operation of such fluid regulators is well known and, thus, is not described in greater detail herein.

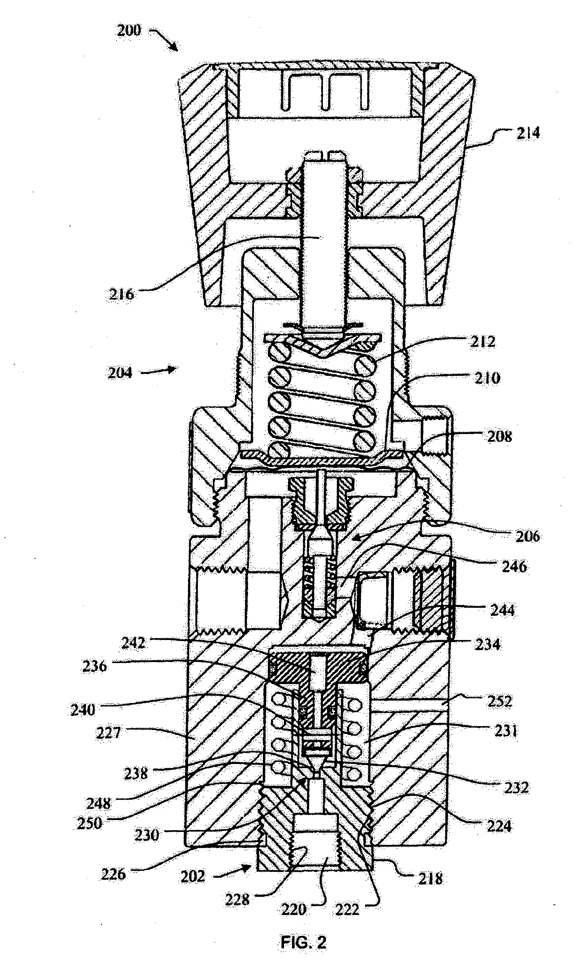

FIG. 2 depicts an example two-stage fluid regulator system or assembly 200 having a modular in-line fluid regulator 202 installed in an adjustable regulator 204. In the example of FIG. 2, the modular in-line fluid regulator 202 functions as a first-stage in-line fluid regulator and the adjustable fluid regulator 204 functions as a second-stage in-line fluid regulator, which is serially fluidly coupled to the modular in-line fluid regulator 202. The adjustable fluid regulator 204 includes a valve assembly 206 that is operatively coupled to a diaphragm 208, a spring plate 210, and a spring 212, all of which cooperate in a conventional manner to control the fluid flowing through the valve assembly 206. Additionally, the regulated output pressure of the adjustable fluid regulator 204 may be set or adjusted via a manually operable adjuster or knob 214 that, when rotated, causes a threaded rod 216 to change the compression of the spring 212.

The modular in-line fluid regulator 202 includes a body 218 having an inlet 220 and a threaded outer surface 222 that engages a threaded inner surface 224 of an opening 226 in a body 227 of the adjustable fluid regulator 204. The threaded inner surface 224 may be sized and configured to receive the threaded outer surface 222 of the body 218 or, alternatively, a threaded coupling, fitting, or the like to directly couple a pressure supply conduit or line. Similarly, the inlet 220 may include an internally threaded surface 228 to receive a threaded coupling, fitting, etc. to couple a pressure supply conduit or line to the modular in-line fluid regulator 202. The modular in-line fluid regulator 202 includes a valve assembly 230 disposed in a cavity 231 and having a plug 232 coupled to a pressure sensing member or piston 234 via a stem 236. The valve assembly 230 operates in a conventional manner to control the flow of fluid from the inlet 220, through an orifice 238 and passageways 240, 242, and 244 to an inlet 246 of the valve 204. A spring 248 is disposed between the piston 234 and a spring seat 250 of the body 218. The spring 248 may be sized and configured to provide a desired regulated pressure at the outlet passage 242 of the regulator 202. Additionally, the cavity 231 may be vented to atmospheric pressure via a passageway 252.

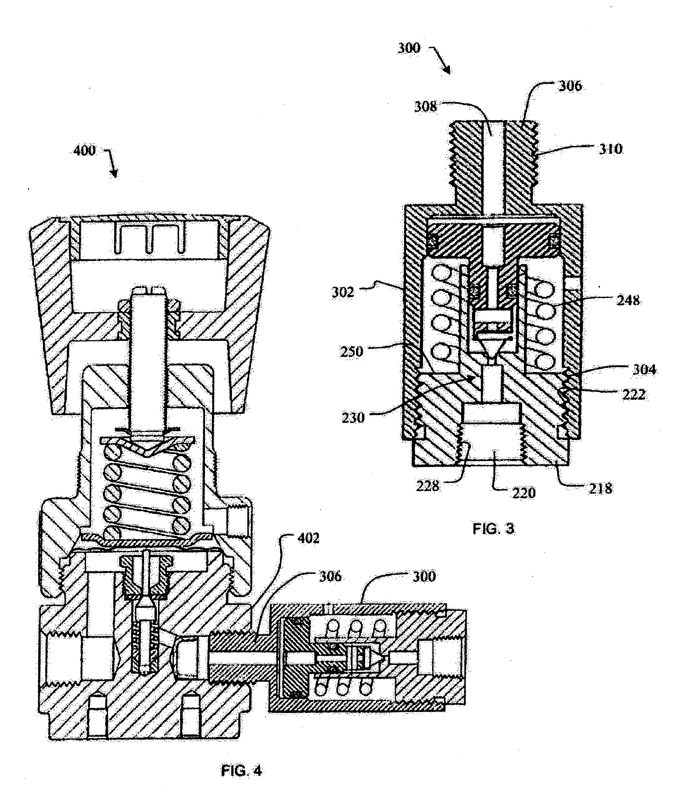

FIG. 3 depicts another example modular in-line fluid regulator 300. The example regulator 300 may be implemented using many components similar or identical to those used to implement the example regulator 202 depicted in FIG. 2. Those similar or identical components are labeled with the same reference numbers used in connection with FIG. 2. Unlike the example modular in-line fluid regulator 202 depicted in FIG. 2, the example modular in-line fluid regulator 300 of FIG. 3 includes an outer body, casing or housing 302 having threads 304 to threadably engage the body 218. Additionally, the outer body, casing, or housing 302 includes a fitting or protrusion 306 having an outlet passage 308 and an externally threaded surface 310.

FIG. 4 depicts the example modular in-line fluid regulator 300 of FIG. 3 installed on a known adjustable regulator 400. As depicted in FIG. 4, the fitting 306 of the example in-line fluid regulator 300 is threadably engaged to an inlet 402 of the fluid regulator 400 so that the modular in-line fluid regulator 300 forms a non-adjustable first-stage fluid pressure regulator and the adjustable regulator 400 functions as a second-stage fluid regulator.

The example modular in-line fluid regulators 202 and 300 described herein can be advantageously used to easily and quickly install another stage of regulation in or on another fluid regulator that has already been field installed. For example, in the case where an existing fluid regulator fails to provide a desired output pressure regulation performance, the example modular in-line fluid regulators 202 and 300 described herein can be installed by removing any inlet fittings from the inlet of the existing fluid regulator, threadably coupling one of the modular in-line fluid regulators 202 and 300 to the inlet of the existing fluid regulator and then coupling the inlet fitting(s) to the inlet of the newly installed modular in-line fluid regulator.

While the example modular in-line fluid regulators 202 and 300 described herein are depicted as being generally cylindrically-shaped, any other shape(s) could be used instead. For example, the casings or bodies used may have a polygonal (e.g., rectangular) cross-section. Additionally, while the example modular in-line fluid regulators described herein are depicted as being fluidly coupled to the inlets of other valves and as using piston operated valves, these example in-line fluid regulators could instead be coupled to a control pressure output or outlet of another fluid regulators and/or diaphragm operated valves could be used instead.

In accordance with one disclosed example, a fluid regulator apparatus includes a first fluid regulator body having a fluid inlet and a threaded outer surface to engage a threaded opening in a second fluid regulator to serially fluidly couple a first fluid regulator to the second fluid regulator. The fluid regulator apparatus also includes a valve to control a flow of fluid through the first fluid regulator, and a pressure sensing member operatively coupled to the valve to control a position of the valve to provide a regulated output pressure at an outlet of the first fluid regulator. In the disclosed example, the pressure sensing member and the valve are configured to be received in a cavity of the second fluid regulator adjacent the threaded opening.

In another disclosed example, a multi-stage fluid regulator includes a first fluid regulator having a body, a first valve disposed within the body, and a first spring to set a first regulated pressure at an outlet of the first regulator. The body of the first regulator includes an opening that is fluidly coupled to the first valve. The multi-stage fluid regulator also includes a second fluid regulator having a body portion including a fluid inlet and a threaded external surface to threadably engage the opening, a second valve, a piston operatively coupled to the second valve, and a spring between the second piston and the body portion to set a second regulated pressure at an outlet of the second fluid regulator.

In yet another disclosed example, a fluid regulator includes a body having an inlet and an outlet. The inlet comprises an internally threaded opening and the outlet comprises an externally threaded protrusion configured to be threadably engaged to an inlet of another fluid regulator. Additionally, the body comprises a casing having a threaded opening to receive a piston-operated fluid valve assembly, and the piston-operated fluid valve assembly comprises a piston to slidably engage an inner wall of the casing, a fluid valve operatively coupled to the piston, and a spring operatively engaged to the piston and the valve to set a regulated output pressure of the fluid regulator.

The preferred aspects of the present disclosure can be summarized as follows.

## Claims

1. A fluid regulator (300), comprising:
a body having an inlet (220) and an outlet (308), wherein the inlet (220) comprises an internally threaded opening (228) and the outlet (308) comprises an externally threaded protrusion (306) configured to be threadably engaged to an inlet (402) of another fluid regulator (400), and wherein the body comprises a casing (302) having a threaded opening (304) to receive a piston-operated fluid valve assembly (230), the piston-operated fluid valve assembly (230) comprising a piston (234) to slidably engage an inner wall of the casing (302), a fluid valve (232) operatively coupled to the piston (234), and a spring (248) operatively engaged to the piston (234) and the fluid valve (232) to set a regulated output pressure of the fluid regulator (300).

2. A fluid regulator as defined in claim 1, wherein the externally threaded protrusion (306) comprises a bore therethrough to fluidly couple the inlet (220) of the body to the inlet (420) of the other fluid regulator (400).

3. A fluid regulator as defined in claim 1, wherein the fluid regulator (300) is configured to be a first-stage in-line fluid regulator.

4. A fluid regulator as defined in claim 1, wherein the body and the externally threaded protrusion (306) are configured to enable field installation of the fluid regulator (300) on the other fluid regulator (400).

## Patentansprüche

1. Fluidregler (300), Folgendes aufweisend:
einen Körper mit einem Einlass (220) und einem Auslass (308), wobei der Einlass (220) eine mit Innengewinde versehene Öffnung (228) aufweist und der Auslass (308) einen mit Außengewinde versehenen Vorsprung (306) aufweist, der dazu ausgelegt ist, in Gewindeeingriff mit einem Einlass (402) eines anderen Fluidreglers (400) gebracht zu werden, und wobei der Körper ein Gehäuse (302) aufweist, das über eine mit Gewinde versehene Öffnung (304) verfügt, um eine kolbenbetätigte Fluidventilbaugruppe (230) aufzunehmen, wobei die kolbenbetätigte Fluidventilbaugruppe (230) einen Kolben (234) zum gleitbeweglichen Angriff an einer Innenwand des Gehäuses (302), ein in Wirkverbindung mit dem Kolben (234) stehendes Fluidventil (232) und eine in Wirkeingriff mit dem Kolben (234) und dem Fluidventil (232) stehende Feder (248) aufweist, um einen geregelten Ausgangsdruck des Fluidreglers (300) einzustellen.

2. Fluidregler nach Anspruch 1, wobei der mit Außengewinde versehene Vorsprung (306) eine Bohrung durch sich hindurch aufweist, um den Einlass (220) des Körpers fluidtechnisch an den Einlass (420) des anderen Fluidreglers (400) anzuschließen.

3. Fluidregler nach Anspruch 1, wobei der Fluidregler (300) als ein Erststufen-Reihenfluidregler ausgelegt ist.

4. Fluidregler nach Anspruch 1, wobei der Körper und der mit Außengewinde versehene Vorsprung (306) dazu ausgelegt sind, eine Feldinstallation des Fluidreglers (300) am anderen Fluidregler (400) zu ermöglichen.

## Revendications

1. Régulateur de fluide (300), comprenant un corps présentant une entrée (220) et une sortie (308), dans lequel l'entrée (220) comprend une ouverture filetée intérieurement (228), et la sortie (308) comprend une saillie filetée extérieurement (306) configurée pour être engagée par vissage sur une entrée (402) d'un autre régulateur de fluide (400), et dans lequel le corps comprend une enceinte (302) comprenant une ouverture filetée (304) destinée à recevoir un ensemble de soupape de fluide actionnée par piston (230), l'ensemble de soupape de fluide actionnée par piston (230) comprenant un piston (234) pour engager de façon coulissante une paroi intérieure de l'enceinte (302), une soupape de fluide (232) couplée de façon opérationnelle au piston (234), et un ressort (248) engagé de façon opérationnelle sur le piston (234) et la soupape de fluide (232) afin de déterminer une pression de sortie régulée du régulateur de fluide (300).

2. Régulateur de fluide selon la revendication 1, dans lequel la saillie filetée extérieurement (306) comprend un alésage qui la traverse destiné à coupler fluidiquement l'entrée (220) du corps à l'entrée (420) de l'autre régulateur de fluide (400).

3. Régulateur de fluide selon la revendication 1, dans lequel le régulateur de fluide (300) est configuré de manière à être un régulateur de fluide en ligne de premier étage.

4. Régulateur de fluide selon la revendication 1, dans lequel le corps et la saillie filetée extérieurement (306) sont configurés de manière à permettre une installation sur site du régulateur de fluide (300) sur l'autre régulateur de fluide (400).
